# EUROPEAN PATENT APPLICATION

(11) **EP 2 402 196 A1**
(43) Date of publication of application: **04.01.2012**
(21) Application number: 11171116.4
(22) Date of filing: 23.06.2011
(51) Int. Cl.: B60K 6/448, B60K 6/52, B60K 6/547, B60K 6/442, B60W 20/00, B60W 10/06, B60W 10/08, B60W 10/10, B60W 30/18

(54) **A hybrid power drive system and a drive method of the same**

(30) Priority: 30.06.2010 CN 201010219072
(71) Applicant: Byd Company Limited, Shenzhen 518118 (CN)
(72) Inventor: Tang, Xiaohua, 518118 Shenzhen (CN); Zhang, Xinxin, 518118 Shenzhen (CN); Luo, Fei, 518118 Shenzhen, (CN); Xiao, Zhigao, 518118 Shenzhen, (CN)
(74) Representative: Gulde Hengelhaupt Ziebig & Schneider

(57) **Abstract**

A hybrid power drive system comprises: an engine (10) operatively coupled to a gearbox (50); a first motor (30) operatively coupled to the engine (10); a first wheel group (60) operatively coupled to the gearbox (50); a second motor (70) operatively coupled to a second wheel group (90); an energy storage device (100) connected to the first motor (30) and the second motor (70), respectively. The gearbox (50) comprises a first gearing mechanism (501) and a second gearing mechanism (502). The first wheel group (60) is operatively coupled to the first gearing mechanism (501) and the second gearing mechanism (502), respectively. The engine (10) is operatively coupled to the first gearing mechanism (501) and the second gearing mechanism (502), respectively. And a method for operating a hybrid power drive system.

## Description

The present disclosure relates to hybrid power vehicles and, more particularly, to a hybrid power drive system and a drive method for operating the hybrid power drive system.

### BACKGROUND OF THE INVENTION

Hybrid power vehicles have the power advantages of both pure-electric vehicles and traditional automobiles, and provide excellent energy saving schemes and environmental protection. However, most current hybrid power automobiles are front-wheel drive or rear-wheel drive. Thus, only two of the four wheels (i.e., one axel) provide power to drive the vehicles. When a two-wheel drive vehicle travels on rough roads, such as in off-road or cross-country environments, the drive system cannot provide power strong enough to satisfy the need of such travel. Thus, current hybrid power drive systems are insufficient.

### SUMMARY

The present invention is directed to solve at least one problem existing in the prior art. As discussed above, there is a need for a hybrid power drive system and a drive method that possess a plurality of drive modes for accurately controlling the clutch or clutches to provide more power and improving efficiency and continuity of power transmission.

According to an embodiment, a hybrid power drive system and a drive method are provided. The hybrid power drive system comprises an engine operatively coupled to a gearbox, a first motor operatively coupled to the engine, a first group of wheels operatively coupled to the gearbox, a second motor operatively coupled to a second group of wheels, and an energy storage device connected to the first motor and the second motor, respectively.

The gearbox comprising a first gearing mechanism and a second gearing mechanism. The first group of wheels is operatively coupled to the first gearing mechanism and the second gearing mechanism, respectively. The engine is operatively coupled to the first gearing mechanism and the second gearing mechanism, respectively.

The first gearing mechanism comprises a first clutch and a first transmission. The engine is operatively coupled to the first group of wheels via the first clutch and the first transmission. The second gearing mechanism comprises a second clutch and a second transmission. The engine is operatively coupled to the first group of wheels via the second clutch and the second transmission in turn. When the first clutch is engaged and the second clutch is disengaged, the rotational power of the engine is transferred to the first group of wheels via the first clutch and the first transmission. When the second clutch is engaged and the first clutch is disengaged, the rotational power of the engine is transferred to the first group of wheels via the second clutch and the second transmission.

A drive method for driving the hybrid power drive system comprises: switching the drive system to operate in one of a plurality of drive modes. In a first drive mode, the vehicle is driven by only the first group of wheels, which is driven by the engine alone. In a second drive mode, the vehicle is driven by only the second group of wheels, which is driven by the second motor alone. In a third driving mode, the drive system operates in a four-wheel drive mode, in which the first group of wheels is driven by the engine and the second group of wheels is driven by the second motor. In the fourth driving mode, the drive system operates in another four-wheel drive mode, in which the first group of wheels is driven by the engine and the first motor in combination and the second group of wheels is driven by the second motor.

The structure of the hybrid power drive system described herein is simpler than existing systems. The drive method may comprise a plurality of two-wheel drive modes and four-wheel drive modes. As a result, it can provide stronger power to vehicles so as to meet the power requirement. The drive method operatively improves the efficiency and the continuity of the vehicle power transmission. Further, this hybrid power drive system can be configured to operate in off-road vehicles.

Further aspects of the invention could be learned from the description and the claims.

### BRIEF DESCRIPTION OF THE DRAWINGS

These and other aspects and advantages of the invention will become apparent and more readily appreciated from the following descriptions taken in conjunction with the drawings in which:
Fig. 1 is a schematic block diagram of a hybrid power drive system according to a first embodiment;
Fig. 2 is a schematic block diagram of a hybrid power drive system according to a second embodiment;
Fig. 3 is a schematic block diagram of a hybrid power drive system according to a third embodiment; and
Fig. 4 is a schematic block diagram of a hybrid power drive system according to a fourth embodiment.

### DETAILED DESCRIPTION OF THE PREFERRED EMBODIMENT

Reference will be made in detail to embodiments of the present disclosure. The embodiments described herein with reference to drawings are explanatory, illustrative, and used to generally understand the present disclosure. The embodiments shall not be construed to limit the present disclosure. The same or similar elements and the elements having same or similar functions are denoted by like reference numerals throughout the descriptions. The references are solely for the purpose of indicating the structural features of the drawings rather than limitation of the scope of the application.

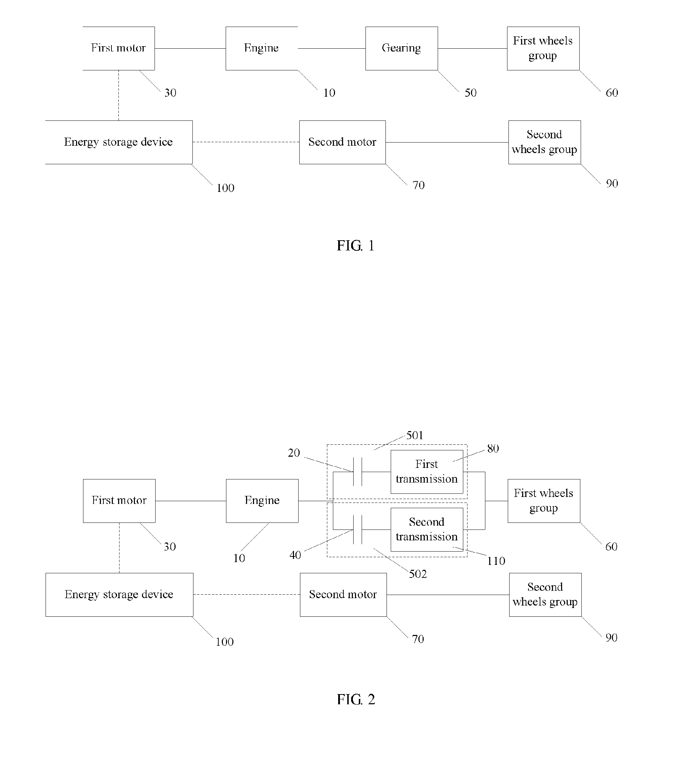

As shown in Fig. 1, according to an embodiment of the disclosure, a hybrid power drive system comprises: an engine 10 operatively coupled to a gearbox 50; a first motor 30 operatively coupled to the engine 10; a first group of wheels 60 operatively coupled to the gearbox 50; a second motor 70 operatively coupled to a second group of wheels 90; and an energy storage device 100 connected to the first motor 30 and the second motor 70, respectively.

The gearbox 50 comprises a first gearing mechanism 501 and a second gearing mechanism 502, as shown in FIG. 2. The first group of wheels 60 is operatively coupled to the first gearing mechanism 501 and the second gearing mechanism 502, respectively. The engine 10 is operatively coupled to the first gearing mechanism 501 and the second gearing mechanism 502, respectively.

The engine 10 may be a gasoline engine, a diesel engine, or any engines using alternative fuel including, but not limited to, natural gas, methanol, ethanol, etc. The engine 10 is a primary power source of the drive system and provides two primary functions: 1) providing drive power to the vehicle when the vehicle is traveling; and 2) driving the first motor 30 to generate electrical power to recharge the energy storage device 100 when needed.

The first motor 30 and the second motor 70 may be AC motors, switched reluctance motors, permanent magnet motors, etc. According to the electromagnetic induction principle, the first motor 30 and the second motor 70 can operate in a generator mode or in a motor mode. When the motors 30 and 70 operate in the generator mode, the motors 30 and 70 convert mechanical energy into electrical energy. When the motors 30 and 70 operate in the motor mode, the motors convert the electrical energy into the mechanical energy.

For example, when the power of the engine 10 is transferred to the first motor 30, as shown in FIG. 2, the first motor 30 operates in the generator mode and thus converts the mechanical energy into the electrical energy. The electrical energy is then transferred to the energy storage device 100 to charge the energy storage device 100, accordingly.

When the drive system is switched to a regenerative braking mode, braking energy fed back from the second group of wheels 90 is transferred to the second motor 70, which operates in the generator mode. Thus, the mechanical energy generated from the braking of the second group of wheels 90 is converted by the second motor 70 into the electrical energy and is transferred to the energy storage device 100 to charge the energy storage device 100, accordingly.

When the energy storage device 100 provides electrical power to the first motor 30 and the second motor 70, both the first motor 30 and the second motor 70 operate in the motor mode, thereby converting the electrical energy into the mechanical energy to drive the first and second groups of wheels.

More specifically, the first motor 30 is a low power motor. The functions of the first motor 30 includes, but not limited to:
1) starting the engine 10;
2) converting the mechanical energy of the engine 10 into electrical energy;
3) providing ancillary power to the vehicle, when the vehicle requires higher power to operate; and
4) stabilizing the operation of the engine 10 when the vehicle starts.

The second motor 70 is a high power motor which may produce maximum output power higher than that produced by the first motor 30. The functions of the second motor 70 includes, but not limited to:
1) providing principal power to drive the vehicle when the vehicle starts;
2) providing ancillary power to the vehicle during vehicle acceleration; and
3) generating electrical power when braking.

The energy storage device 100 may be a rechargeable energy source, such as a storage battery pack, a fuel battery pack, etc.

The gearbox 50 may be deceleration gear set, transmissions, differential mechanisms, planetary gears, etc. As those skilled in the art would appreciate, the power transferred via the gearbox 50 may be further transferred to the first group of wheels 60 through shaft coupling, drive shafts, etc.

As shown in FIG. 2, according to a second embodiment, the gearbox 50 of the hybrid power drive system includes a first gearing mechanism 501 and a second gearing mechanism 502. The first gearing mechanism 501 and the second gearing mechanism 502 operatively coupled between the engine 10 and the first group of wheels 60, respectively. The rotational power of the engine 10 can be transferred to the first group of wheels 60 via the first gearing mechanism 501 or the second gearing mechanism 502, respectively. Each of the first gearing mechanism 501 and the second gearing mechanism 502 may also include one or more gear sets with various gear ratios. The gear ratios of the first gearing mechanism 501 may be different from the gear ratios of the second gearing mechanism 502. The drive system may operate in different gears by switching between the two gearing mechanisms 501 and 502, making the system suitable for various conditions.

The first gearing mechanism 501 comprises a first clutch 20 and a first transmission 80. The engine 10 is operatively coupled to the first group of wheels 60 via the first clutch 20 and the first transmission 80. The second gearing mechanism 502 comprises a second clutch 40 and a second transmission 110. Furthermore, the engine 10 is operatively coupled to the first group of wheels via the second clutch 40 and the second transmission 110.

When the first clutch 20 is engaged and the second clutch 40 is disengaged, the rotational power of the engine 10 is transferred to the first group of wheels 60 via the first clutch 20 and the first transmission 80. When the second clutch 40 is engaged and the first clutch 20 is disengaged, the rotational power of the engine 10 is transferred to the first group of wheels 60 via the second clutch 40 and the second transmission 110.

The drive system can operate in different gears by switching between the first transmission 80 and the second transmission 110. The drive system can switch power transmission route between the first transmission 80 and the second transmission 110 by controlling the first clutch 20 and the second clutch 40 to be engaged or disengaged. For example: when the system engages the first clutch 20 and disengages the second clutch 40, the power is transferred through a first route including the engine 10, the first clutch 20, the first transmission 80, and the first group of wheels 60. When the system disengages the first clutch 20 and engages the second clutch 40, the power is transferred through a second route including the engine 10, the second clutch 40, the second transmission 110, and the first group of wheels 60. The process of shifting between the first and the second route does not interrupt the power transmission between the engine 10 and the first group of wheels 60, thereby improving the efficiency and the continuity of the vehicle power transmission. The gearbox 50 includes one or more gear ratios, which allows the engine 10 to operate in the maximal efficiency interval.

The first clutch 20 and the second clutch 40 are electronically controlled clutches which can be controlled accurately to improve the continuity of the vehicle power transmission.

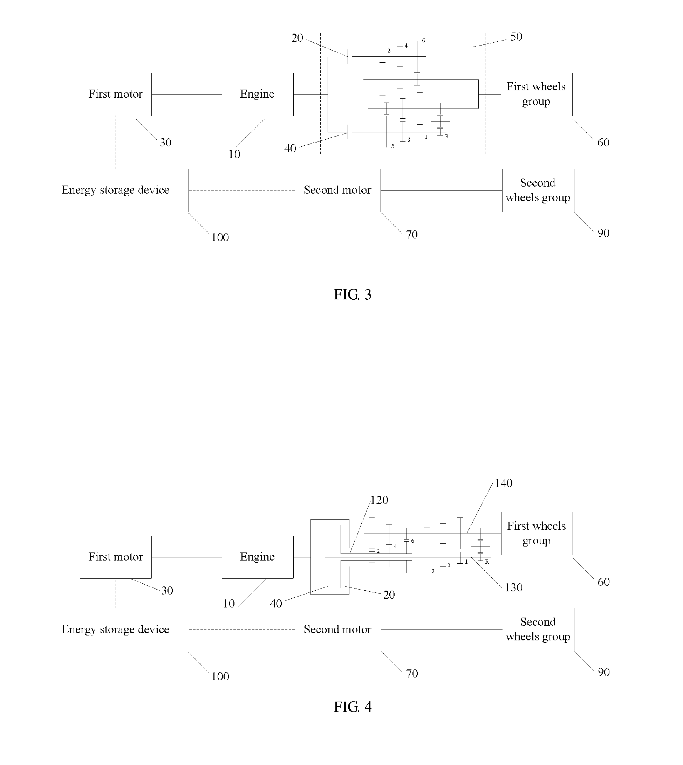

As shown in FIG. 3 and FIG. 4, the input shaft 120 of the first transmission 80 may be a hollow shaft, and the input shaft 130 of the second transmission 110 may be inside of the input shaft 120 of the first transmission 80. The input shaft 120 and the input shaft 130 are coaxial. The input shaft 120 of the first transmission 80 is operatively coupled to the flywheel of the engine 10 via the first clutch 20; and the input shaft 130 of the second transmission 110 is operatively coupled to the flywheel of the engine 10 via the second clutch 40. The gearbox 50 further includes an output shaft 140. The output shaft 140 is operatively coupled to the input shaft 120 of the first transmission 80 and the input shaft 130 of the second transmission 110 via a gear set. In addition, the output shaft 140 is operatively coupled to the first group of wheels 60. The first transmission 80 includes at least one even gear. The second transmission 110 includes at least one odd gear and a reverse gear.

FIG. 4 illustrates another embodiment of the drive system which has six gears. In particular, the input shaft 120 of the first transmission 80 has 2nd, 4th, and 6th drive gears, and the output shaft 140 has 2nd, 4th, and 6th gears that mesh with the corresponding drive gears of the input shaft 120 of the first transmission 80. The rotational power can be transferred to the first group of wheels 60 via only one pair of the meshing gears, when the first clutch 20 is engaged.

Similarly, the input shaft 130 of the second transmission 110 has 1st, 3rd, and 5th drive gears, and the output shaft 140 has 1st, 3rd, and 5th gears that mesh with the corresponding drive gears of the input shaft 130 of the second transmission 110. When the second clutch 40 is engaged, the rotational power can be transferred to the first group of wheels 60 via only one pair of the meshing gears. The input shaft 130 of the second transmission 110 further has a reverse gear, which may mesh with the reverse gear of the output shaft 140 to reverse the vehicle.

The gearbox 50 may be a Direct-Shift Gearbox (DSG). DSG is an electronically controlled dual-clutch multiple-shaft gearbox. For example, one clutch (e.g., the second clutch 40) drives the odd gears and the reverse gear, and another clutch (e.g., the first clutch 20) drives the even gears. The gear ratio may be changed by independently engaging/disengaging the first clutch 20 and/or the second clutch 40. The DSG utilizes velocity, acceleration, power, and fuel consumption as control parameters to determine a shift time of the gearbox 50. Specifically, when the vehicle accelerates, the gearbox 50 controls the shift time to provide more power. When the vehicle does not accelerate, the gearbox 50 controls the shift time to conserve fuel while meeting the power requirement.

The drive system may operate in different modes, including an engine drive mode, a second motor drive mode, an engine and second motor drive mode, and an engine and dual motors drive mode.

In the engine drive mode, the rotational power of the engine 10 is transferred to the first group of wheels 60 via the gearbox 50. In this mode, the vehicle is driven by the first group of wheels 60.

In the second motor drive mode, the energy storage device 100 provides power to the second motor 70, and the rotational power of the second motor 70 is transferred to the second group of wheels 90. In this mode, the vehicle is driven by the second group of wheels 90.

In the engine and second motor drive mode, the engine 10 and the second motor 70 both provide power to drive the vehicle. Specifically, the rotational power of the engine 10 is transferred to the first group of wheels 60 via the gearbox 50. Simultaneously, the energy storage device 100 provides electrical power to the second motor 70, and the rotational power of the second motor 70 is transferred to the second group of wheels 90. In this mode, the vehicle is driven by both the first group of wheels 60 and the second group of wheels 90.

In the engine and dual motors drive mode, the engine 10, the first motor 30, and the second motor 70 all operate to provide power to drive the vehicle. Specifically, the rotational power of the engine 10 is transferred to the first group of wheels 60 via the gearbox 50. Simultaneously, the energy storage device 100 provides power to the first motor 30 and the second motor 70. The rotational power of the first motor 30 is transferred to the first group of wheels 60 via the gearbox 50, and the rotational power of the second motor 70 is transferred to the second group of wheels 90. In this mode, the vehicle is driven by both the first group of wheels 60 and the second group of wheels 90.

As further shown in FIG. 2, according to another embodiment, the hybrid power drive system may further operate in a self charging mode when the vehicle is either parked or traveling.

In the self charging mode, when the vehicle is parked and the engine 10 is operating, the first clutch 20 and the second clutch 40 are both disengaged. The rotational power of the engine 10 is transferred to the first motor 30, which operates as a power generator for generating electrical power to charge the energy storage device 100. When the vehicle is running and the engine 10 is operating, a portion of the rotational power of the engine 10 is transferred to the first motor 30, which operates as a power generator for generating electrical power to charge the energy storage device 100. In addition, the energy storage device 100 may simultaneously provide electrical power to the second motor 70 to drive the second group of wheels 90.

Alternatively, the energy storage device 100 may have an external charging interface configured to charge the energy storage device 100 from an external power source. For example, a domestic power source can be used to charge the energy storage device 100, thereby greatly improving convenience and ease of use of the system.

According to another embodiment, a drive method for utilizing the hybrid power drive system is provided. Specifically, the method comprises switching the drive system among a plurality of modes including the engine drive mode, the second motor drive mode, the engine and second motor drive mode, the engine and dual-motor drive mode, and the self charging mode.

In the engine drive mode, the engine 10 operates as the only power source. The rotational power of the engine 10 is transferred to the first group of wheels 60 via the gearbox 50. In this mode, the vehicle is driven by only the first group of wheels 60. More specifically, when the first clutch 20 is engaged and the second clutch 40 is disengaged, the rotational power of the engine 10 is transferred to the first group of wheels 60 via the first clutch 20 and the first transmission 80. When the first clutch 20 is disengaged and the second clutch 40 is engaged, the rotational power of the engine 10 is transferred to the first group of wheels 60 via the second clutch 40 and the second transmission 110.

In the second motor drive mode, the energy storage device 100 operates as the only power source to provide power to the second motor 70, and the rotational power of the second motor 70 is transferred to the second group of wheels 90. In this mode, the vehicle is driven by only the second group of wheels 90.

In the engine and second motor drive mode, the engine 10 and the energy storage device 100 operates together to provide power to the drive system. In particular, the rotational power of the engine 10 is transferred to the first group of wheels 60 via the gearbox 50, and the energy storage device 100 provides power to the second motor 70 so that the rotational power of the second motor 70 is transferred to the second group of wheels 90. In this mode, the vehicle is driven by both the first group of wheels 60 and the second group of wheels 90.

In the engine and dual motors drive mode, the engine 10 and the energy storage device 100 operate together to provide power to drive the system. Specifically, the rotational power of the engine 10 is transferred to the first group of wheels 60 via the gearbox 50. Simultaneously, the energy storage device 100 provides power to the first motor 30 and the second motor 70. The rotational power of the first motor 30 is transferred to the first group of wheels 60 via the gearbox 50, and the rotational power of the second motor 70 is transferred to the second group of wheels 90. In this mode, the vehicle is driven by both the first group of wheels 60 and the second group of wheels 90.

In the self charging mode, when the vehicle is parked and the engine is operating, the first clutch 20 and the second clutch 40 are both disengaged. Accordingly, the rotational power of the engine 10 is transferred to the first motor 30, which operates as a power generator for generating electrical power to charge the energy storage device 100. When the vehicle is running and the engine 10 is operating, a portion of the rotational power of the engine 10 is transferred to the first motor 30. Specifically, the first motor operates as a power generator for generating electrical power to charge the energy storage device 100. At the same time, the energy storage device 100 may in turn provide electrical power to the second motor 70 so that the rotational power of the second motor 70 is transferred to the second group of wheels 90 to drive the vehicle.

The drive method may further comprise switching the drive system to a braking mode. When the acceleration pedal of the vehicle is eased off or the brake pedal of the vehicle is pressed down, the system operates in the braking mode. In the braking mode, the first clutch 20 and the second clutch 40 are both disengaged. Accordingly, the braking energy fed back from the second group of wheels 90 is transferred to the second motor 70, and the second motor 70 operates as a power generator for generating electrical power to charge the energy storage device 100.

When the vehicle starts, the first motor 30 starts the engine 10. The rotational power of the engine 10 is transferred to the first group of wheels 60 by selecting an appropriate gear (for example, the first gear being selected by disengaging the first clutch 20 and engaging the second clutch 40). Simultaneously, the energy storage device 100 provides power to the second motor 70 and the rotational power of the second motor 70 is transferred to the second group of wheels 90 for driving the vehicle. Additionally, the engine 10 may drive the first motor 30 for generating electrical power to recharge the energy storage device 100. Furthermore, the first motor 30 may be controlled to stabilize the rotational speed of the engine 10.

After the vehicle starts, the drive system operates in the engine drive mode. Accordingly, the rotational power of the engine 10 is transferred to the first group of wheels 60 via the gearbox 50 for driving the vehicle. As shown in FIG. 3, when the first clutch 20 is engaged and the second clutch 40 is disengaged, an even gear may be selected. When the first clutch 20 is disengaged and the second clutch 40 is engaged, an odd gear may be selected. The fuel economy and the efficiency of the engine may be used to determine the appropriate gear.

When the vehicle is running, if the required power of the vehicle is less than or equal to the maximum output power of the engine 10, the vehicle continues to run in the engine drive mode. Alternatively, if the required power of the vehicle is more than the maximum output power of the engine 10, the vehicle runs in the engine and second motor drive mode. Specifically, the energy storage device 100 provides power to the second motor 70 and the rotational power of the second motor 70 is transferred to the second group of wheels 90.

If the required power of the vehicle is more than the sum of the maximum output power of the engine 10 and the second motor 70, the vehicle runs in the engine and dual motors drive mode. Accordingly the vehicle is driven by both the first group of wheels 60 and the second group of wheels 90. In this mode, the power sources include the engine 10, the first motor 30, and the second motor 70. Accordingly, when the engine 10 starts, the first clutch 20 or the second clutch 40 is engaged. The rotational power of the engine 10 is transferred to the first group of wheels 60 via the gearbox 50 for driving the vehicle. Simultaneously, the energy storage device 100 provides power to the first motor 30 and the second motor 70, so that the first motor 30 drives the first group of wheels 60 via the gearbox 50, and the second motor 70 drives the second group of wheels 90.

In the above-mentioned drive modes, the drive system may detect the power level of the energy storage device 100 to determine whether the energy storage device 100 needs to be recharged or not. If yes, then the first motor 30 operates as a generator to charge the energy storage device 100.

Although the preferred embodiments of the present disclosure have been described above, the present disclosure is not limited to the above words, and those who are skilled in this field shall understand that many amendments, replacements or variations may be made according to the present disclosure, which are all within the scope of protection of the present disclosure.

## Claims

1. A hybrid power drive system comprising:
an engine (10) operatively coupled to a gearbox (50);
a first motor (30) operatively coupled to the engine (10);
a first wheel group (60) operatively coupled to the gearbox (50);
a second motor (70) operatively coupled to a second wheel group (90);
an energy storage device (100), operatively coupled to the first motor (30) and the second motor (70), respectively; and
the gearbox (50) comprising a first gearing mechanism (501) and a second gearing mechanism (502), wherein:
the first wheel group (60) is operatively coupled to the first gearing mechanism (501) and the second gearing mechanism (502), respectively; and
the engine (10) is operatively coupled to the first gearing mechanism (501) and the second gearing mechanism (502), respectively.

2. The hybrid power drive system of claim 1, wherein:
the first gearing mechanism (501) comprises a first clutch (20) and a first transmission (80);
the engine (10) is operatively coupled to the first wheel group (60) via the first clutch (20) and the first transmission (80);
the second gearing mechanism (502) comprises a second clutch (40) and a second transmission (110);
the engine (10) is operatively coupled to the first wheel group (60) via the second clutch (40) and the second transmission (110);
when the first clutch (20) is engaged and the second clutch (40) is disengaged, the rotational power of the engine (10) is transferred to the first wheel group (60) via the first clutch (20) and the first transmission (80); and
when the second clutch (40) is engaged and the first clutch (20) is disengaged, the rotational power of the engine (10) is transferred to the first wheel group (60) via the second clutch (40) and the second transmission (110).

3. The hybrid power drive system of claim 2, wherein the hybrid power drive system is configured to operate in one of:
an engine drive mode;
a second motor drive mode;
an engine and second motor drive mode; or
an engine and dual motors drive mode.

4. The hybrid power drive system of claim 3, wherein in the engine drive mode, the engine (10) drives the first wheel group (60) via the gearbox (50).
and/or
in the second motor drive mode, the energy storage device (100) provides power to the second motor (70), and the second motor (70) drives the second wheel group (90).
and/or
in the engine and second motor drive mode, the engine (10) drives the first wheel group (60) via the gearbox (50), the energy storage device (100) provides power to the second motor (70), and the second motor (70) drives the second wheel group (90).
and/or
in the engine and dual-motor drive mode, the engine (10) drives the first wheel group (60) via the gearbox (50), the energy storage device (100) provides power to the first motor (30) and the second motor (70), the first motor (30) drives the first wheel group (60) via the gearbox (50), and the second motor (70) drives the second wheel group (90).

5. The hybrid power drive system of claim 3, wherein the hybrid power drive system is further configured to operate in a self charging mode.

6. The hybrid power drive system of claim 5, wherein in the self charging mode:
a first part of rotational power of the engine (10) is transferred to the first wheel group (60) via the gearbox (50);
a second part of the rotational power of the engine (10) is transferred to the first motor (30); and
the first motor (30) generates electrical power for charging the energy storage device (100).

7. The hybrid power drive system of claim 3, wherein the hybrid power drive system further operates in a braking mode.

8. The hybrid power drive system of claim 7, wherein in the braking mode:
the first clutch (20) and the second clutch (40) are both disengaged;
the second wheel group (90) transfers braking energy to the second motor (70); and
the second motor (70) generates electrical power for charging the energy storage device (100).

9. A method for operating a hybrid power drive system according to any one of claim 1 to 8, wherein the method comprising:
driving a first wheel group (60) by the engine (10) through the gearbox (50);
powering the second motor (70) by the energy storage device (100);
driving a second wheel group (90) by the second motor (70); and
setting the first motor (30) in one of a generator mode and a motor mode according to power requirements and vehicle conditions, wherein in the generator mode, the engine (10) drives the first motor (30) to recharge the energy storage device (100), and in the motor mode, the first motor (30) and the engine (10) together drive the first wheel group (60) through the gearbox (50).

10. The method of claim 9, further comprising:
switching the first motor (30) and/or the second motor (70) to the generator mode when a break paddle is applied; and
recharging the energy storage device (100) by the first motor (30) and/or the second motor (70) operating in the generator mode.

11. The method of claim 9, further comprising:
detecting an increase in the power requirements; and
switching the first motor (30) to the motor mode.

12. The method of claim 11, further comprising:
detecting an decrease in the power requirements; and
switching off the first motor (30).

13. The method of claim 12, further comprising:
switching off the second motor (70) in response to the decrease in the power requirements.

14. The method of claim 9, wherein the gearbox (50) comprises a first clutch (20) operatively coupled to a first transmission (80) and a second clutch (40) operatively coupled to a second transmission (110), the method further comprising:
controlling the first clutch (20) and the second clutch (40) to select one of the first transmission (80) and the second transmission (110) to drive the first wheel group (60).

15. The method of claim 14, further comprising:
engaging the first clutch (20) and disengaging the second clutch (40);
driving the first wheel group (60) by the engine (10) through the first transmission (80);
disengaging the first clutch (20) and engaging the second clutch (40); and
driving the first wheel group (60) by the engine (10) through the second transmission (110).
